# EUROPÄISCHE PATENTSCHRIFT

(11) **EP 1 559 997 B1**
(45) Veröffentlichungstag und Bekanntmachung des Hinweises auf die Patenterteilung: **23.01.2008**
(21) Anmeldenummer: 04029421.7
(22) Anmeldetag: 13.12.2004
(51) Int. Cl.: G01C 25/00, G01C 9/28

(54) **Wasserwaage**
Spirit level
Niveau à bulle

(30) Priorität: 28.01.2004 AT 1122004
(43) Veröffentlichungstag der Anmeldung: 03.08.2005
(73) Patentinhaber: SOLA-Messwerkzeuge GmbH, 6840 Götzis (AT)
(72) Erfinder: Scheyer, Wolfgang, 6840 Götzis (AT)
(74) Vertreter: Hofmann, Ralf U.

(56) Entgegenhaltungen:
- DE-A1- 3 127 399
- DE-A1- 3 606 774

## Beschreibung

Die Erfindung betrifft eine Wasserwaage mit einem aus einem Hohlprofil bestehenden Wasserwaagenkörper, der eine Bodenwand, deren Unterseite eine Messfläche bildet, eine Deckwand und die Bodenwand und die Deckwand verbindende Seitenwände aufweist, und mit einer Horizontallibelle für eine Horizontalmessung, die in einer Fensterausnehmung des Wasserwaagenkörpers angeordnet ist und im Wasserwaagenkörper mittels einer Haltevorrichtung befestigt ist, welche eine Libellenfassung, in der die Horizontallibelle festgelegt ist, und mindestens ein Spannteil aufweist, welches zum Verspannen der Haltevorrichtung im Wasserwaagenkörper gegenüber der Libellenfassung verschiebbar ist.

Eine Wasserwaage der eingangs genannten Art ist aus der DE 36 06 774 C2 bekannt. Die Libellenfassung weist Spreiznocken auf, die mit Spreizkörpern zusammenwirken, welche Spannteile bilden. Durch Verschieben der Spreizkörper ausgehend von ihrer Passivstellung in ihre Aktivstellung werden die Spreiznocken an die Innenseiten der Seitenwände des Wasserwaagenkörpers angedrückt, wodurch die Haltevorrichtung für die Horizontallibelle im Wasserwaagenkörper verspannt ist. Zwar ergibt sich bei der Einrichtung der DE 36 06 774 C2 eine einfache Montage der Haltevorrichtung für die Horizontallibelle im Wasserwaagenkörper, allerdings hat es sich gezeigt, dass bei Temperaturschwankungen die Justierung der Libelle gegenüber der Messfläche des Wasserwaagenkörpers nicht optimal beibehalten wird. Auch können Toleranzen des Profilquerschnitts des Wasserwaagenkörpers und der Teile der Haltevorrichtung nur sehr beschränkt aufgenommen werden.

Daneben sind auch in den Wasserwaagenkörper eingeklebte und in die Ausnehmung im Wasserwaagenkörper eingeschnappte Haltevorrichtungen für die Horizontallibelle bekannt. Auch hier tritt das Problem auf, dass durch Temperaturschwankungen die Messgenauigkeit beeinflusst wird.

Es ist weiters eine Haltevorrichtung bekannt, bei der die in die Fensterausnehmung eingesetzte Libellenfassung mittels eines durch eine Spannschraube verstellbaren Spannteils an die Innenseite der Deckwand des Hohlprofils angedrückt wird. Die Justierung der Libelle gegenüber dem Wasserwaagenkörper erfolgt hierbei durch eine geringe plastische Verformung im Sinne eines Eindrückens der Deckwand des Wasserwaagenkörpers in einem Bereich, in welchem die Libellenfassung an die Deckwand angedrückt wird. Zwar ist das Temperaturverhalten dieser Haltevorrichtung gegenüber den zuvor beschriebenen Haltevorrichtungen besser, der Einbau und die Justierung sind aber relativ aufwändig. Auch wirken sich nachträgliche Verformungen der Deckwand (beispielsweise durch Stöße im Laufe der Benutzung der Wasserwaage) unmittelbar auf die Justierung der Horizontallibelle gegenüber der Messfläche aus.

Aufgabe der Erfindung ist es, eine Wasserwaage bereitzustellen, bei der Temperaturschwankungen die Messgenauigkeit der Horizontallibelle möglichst wenig beeinflussen. Erfindungsgemäß gelingt dies durch eine Wasserwaage mit den Merkmalen des Patentanspruchs 1.

Da das mindestens eine Spannteil die Libellenfassung an die Innenseite der Bodenwand andrückt, deren Unterseite die Messfläche bildet, kann trotz verschiedener Ausdehnungskoeffizienten der verschiedenen Teile (Wasserwaagenkörper, Libellenfassung, Spannteil und Libelle) der Einfluss auf die Messgenauigkeit äußerst klein gehalten werden. Unterschiedliche Ausdehnungswerte von Wasserkörper, Libellenfassung und Spannteil können vorteilhafterweise durch eine elastisch biegbare Ausbildung des Spannteils ausgeglichen werden. Ebenso können Querschnittstoleranzen des Wasserwaagenkörpers und Toleranzen der Einbauteile (Libellenfassung und Spannteil) vorteilhafterweise durch eine elastisch biegbare Ausbildung des Spannteils aufgenommen werden.

In einer bevorzugten Ausführungsform der Erfindung ist das Spannteil als U-förmiger Bügel ausgebildet und weist zwei über einen Verbindungsschenkel verbundene Arme auf, deren vom Verbindungsschenkel abgelegene Enden sich an der Innenseite der Deckwand beidseitig (bezogen auf die Längsausdehnung des Wasserwaagenkörpers) der Fensteröffnung abstützen. Der Verbindungsschenkel kann hierbei im montierten Zustand der Haltevorrichtung mit der Libellenfassung verbunden sein (beispielsweise durch eine Schnappverbindung) und elastisch gebogen sein, wobei er eine Andrückkraft auf die Libellenfassung ausübt, mit der diese gegen die Bodenwand des Wasserwaagenkörpers gedrückt wird.

Bevorzugterweise ist im montierten (= verspannten) Zustand der Haltevorrichtung das mindestens eine Spannteil mit der Libellenfassung durch eine Schnappverbindung verbunden (= verrastet). Dies ermöglicht eine sehr einfache Montage der Haltevorrichtung im Wasserwaagenkörper.

Weitere Vorteile und Einzelheiten der Erfindung werden im Folgenden anhand der beiliegenden Zeichnung erläutert. In dieser zeigen:
- Fig. 1: ein Ausführungsbeispiel einer erfindungsgemäßen Wasserwaage in perspektivischer Darstellung;
- Fig. 2: eine Seitenansicht eines Ausschnitts der Wasserwaage im Bereich der Horizontallibelle;
- Fig. 3: eine achsiale Ansicht des mittleren Ausschnitts von Fig. 2 (Blickrichtung C);
- Fig. 4: einen vertikalen Längsschnitt entlang der Linie B-B von Fig. 3;
- Fig. 5: einen Querschnitt entlang der Linie A-A von Fig. 2;
- Fig. 6: eine Explosionsdarstellung der Teile der Wasserwaage des mittleren Ausschnitts von Fig. 2;
- Fig. 7: eine Seitenansicht entsprechend Fig. 2 während der Montage der Haltevorrichtung (vor dem Verrasten des Spannteils mit der Libellenfassung);
- Fig. 8: eine Ansicht analog Fig. 3 im Montagezustand entsprechend Fig. 7;
- Fig. 9: einen vertikalen Längsschnitt entlang der Linie E-E von Fig. 8;
- Fig. 10: einen Querschnitte entlang der Linie D-D von Fig. 7;
- die Fig.: 11 bis 14 Darstellungen entsprechend der Fig. 7 bis 10, aber im miteinander verrasteten Zustand des Spannteils und der Libellenfassung;
- Fig. 15: eine perspektivische Darstellung während der Montage mit einem Montagewerkzeug;
- Fig. 16: eine perspektivische Darstellung eines weiteren Ausführungsbeispiels der Erfindung und
- Fig. 17: einen vertikalen Längsmittelschnitt analog zu Fig. 13 eines weiteren Ausführungsbeispiels der Erfindung.

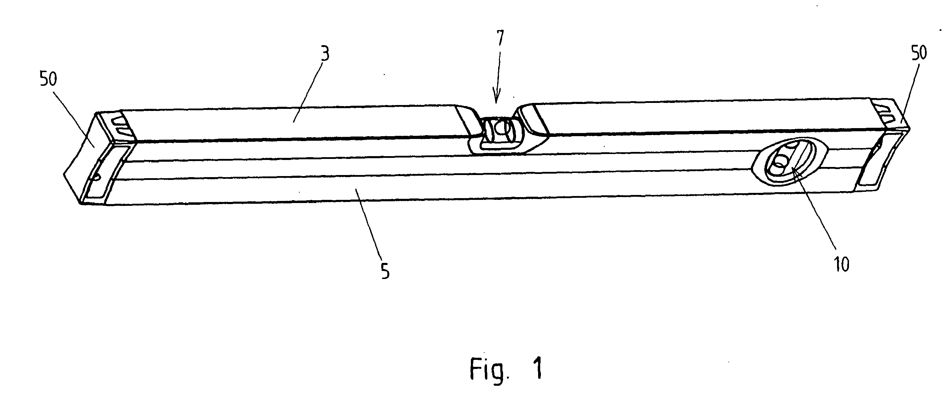

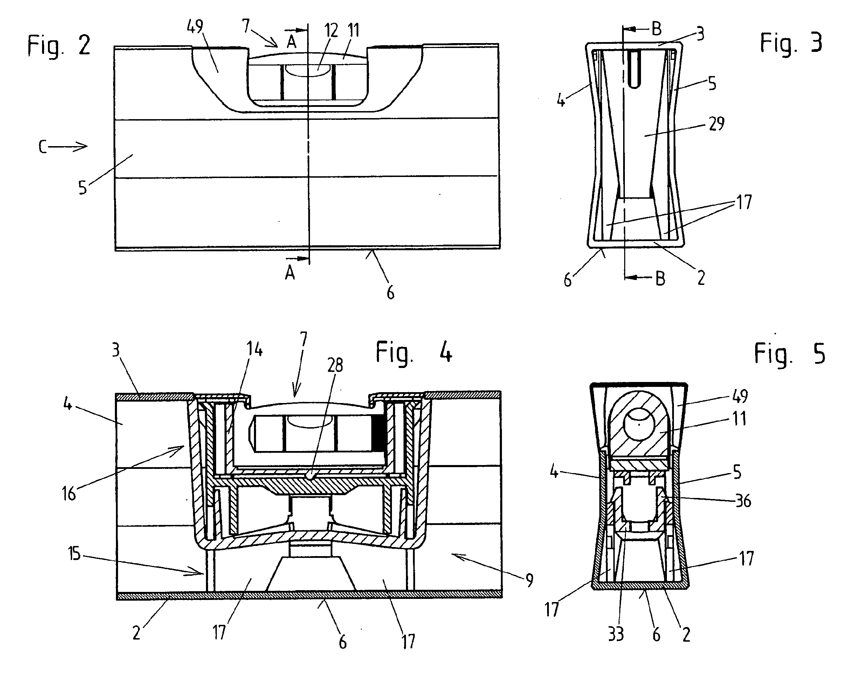

Ein erstes Ausführungsbeispiel der Erfindung ist in den Fig. 1 bis 15 dargestellt. Die Wasserwaage besitzt einen Wasserwaagenkörper 1, der von einem Hohlprofil gebildet wird, welches eine Bodenwand 2, eine Deckwand 3 und Seitenwände 4, 5 aufweist, die die Bodenwand und die Deckwand miteinander verbinden. Die Unterseite der Bodenwand 2 bildet eine Messfläche 6. Die Wasserwaage besitzt zur Durchführung einer Horizontalmessung eine Horizontallibelle 7, die in einer Fensterausnehmung 8 des Wasserwaagenkörpers 1 angeordnet ist, zu welchem Zweck eine Haltevorrichtung 9 dient. Im gezeigten Ausführungsbeispiel, und wie dies bei Wasserwaagen üblich ist, besitzt die Wasserwaage weiters zur Durchführung einer Vertikalmessung eine Vertikallibelle 10. Diese ist ebenfalls in einer Fensterausnehmung im Wasserwaagenkörper mittels einer Haltevorrichtung festgelegt. Die Ausbildung der Haltevorrichtung der Vertikallibelle ist im Zusammenhang mit der vorliegenden Erfindung unerheblich und muss somit nicht weiter erläutert werden. Diese Haltevorrichtung für die Vertikallibelle kann in herkömmlicher Weise ausgebildet sein. Grundsätzlich könnte eine Vertikallibelle auch entfallen. In die Enden des Wasserwaagenkörpers 1 können Endkappen 50 eingesteckt sein.

Die Horizontallibelle 7 kann in herkömmlicher Weise ausgebildet sein und einen Libellenkörper 11 mit einem tonnenförmigen Hohlraum aufweisen, in den eine Libellenflüssigkeit eingefüllt ist, die eine Blase 12 enthält. Zur Markierung der Horizontallage ist der Libellenkörper 11 mit Markierungsringen 13 versehen. Der Libellenkörper 11 ist in einen diesen stirnseitig und an der Unterseite umgebenden Rahmen 14, der in Seitenansicht somit U-förmig ausgebildet ist, eingeklebt.

Der Libellenkörper 11 ist im gezeigten Ausführungsbeispiel als sogenannte relativ dickwandige "Blocklibelle" ausgebildet, bei welcher der Libellenkörper zunächst mit einem zylindrischen bzw. zu seiner Öffnungsseite (die später verschlossen wird) hin leicht konischen Hohlraum gespritzt wird, welcher in der Folge tonnenförmig ausgedreht wird. Auch eine Ausbildung als sogenannte "Röhrenlibelle" wäre denkbar und möglich, bei der ein relativ dünnwandiger Libellenkörper von vorne herein mit einem tonnenförmigen Hohlraum gespritzt wird und zwangsentformt wird.

Die Haltevorrichtung 9 für die Horizontallibelle 7 umfasst eine Libellenfassung 15 und ein Spannteil 16. Die Libellenfassung 15 besitzt Stützfüße 17, deren freie Enden im montierten Zustand der Haltevorrichtung 9 an die Innenseite der Bodenwand 2 angedrückt sind. Weiters besitzt die Libellenfassung 15 einen Aufnahmeraum 18 für die Horizontallibelle 7. Dieser wird von einem Bodenteil 19 und auf die Längsrichtung der Wasserwaage bezogen an beiden Enden des Bodenteils 19 angebrachten stirnseitigen Teile 20, 21 begrenzt. An den Seitenrändern der stirnseitigen Teile 20, 21 stehen jeweils Flanschstege 22 ab, welche im eingesetzten Zustand der Horizontallibelle vertikale Abschnitte des Rahmens 14 überlappen. Die beiden Stützfüße 17 an einer jeweiligen Längsseite der Libellenfassung 15 sind durch einen Brückenabschnitt 23 miteinander verbunden, in welchem erste und zweite Rastausnehmungen 24, 25 angeordnet sind.

Im Bodenteil 19 sind weiters eine Durchgangsöffnung 26 und eine querverlaufende Rinne 27 ausgebildet. In dieser Rinne 27 liegt im montierten Zustand der Horizontallibelle 7 ein Schwenksteg 28, der an der Unterseite des Rahmens 14 ausgebildet ist, wobei die Höhe des Schwenkstegs 28 größer als die Tiefe der Rinne 27 ist.

Das Spannteil 16 ist als in Seitenansicht gesehen U-förmiger Bügel ausgebildet und besitzt zwei Arme 29, 30, welche im montierten Zustand der Haltevorrichtung 9 mit einer Normalen 31 auf die Messfläche 6 einen Winkel 32 von weniger als 45° einschließen, wobei dieser Winkel 32 bevorzugterweise weniger als 20° beträgt, wobei ein Wert von weniger als 10° besonders bevorzugt ist. Die Arme 29, 30 sind durch einen in Längsrichtung des Wasserwaagenkörpers 1 verlaufenden Verbindungsschenkel 33 miteinander verbunden. An ihren vom Verbindungsschenkel 33 abgelegenen freien Enden 34, 35 stützen sich die Arme 29, 30 im montierten Zustand der Haltevorrichtung 9 an der Innenseite der Deckwand 3 ab.

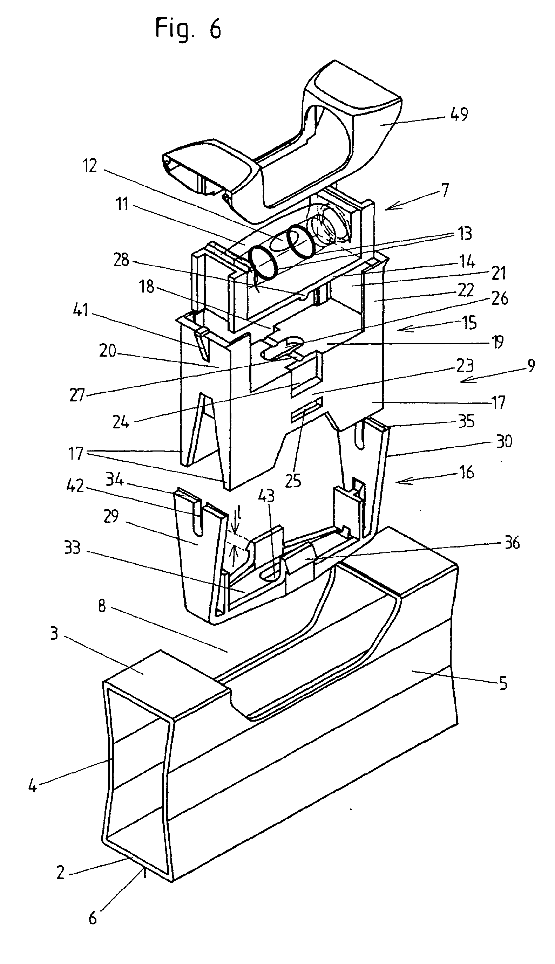

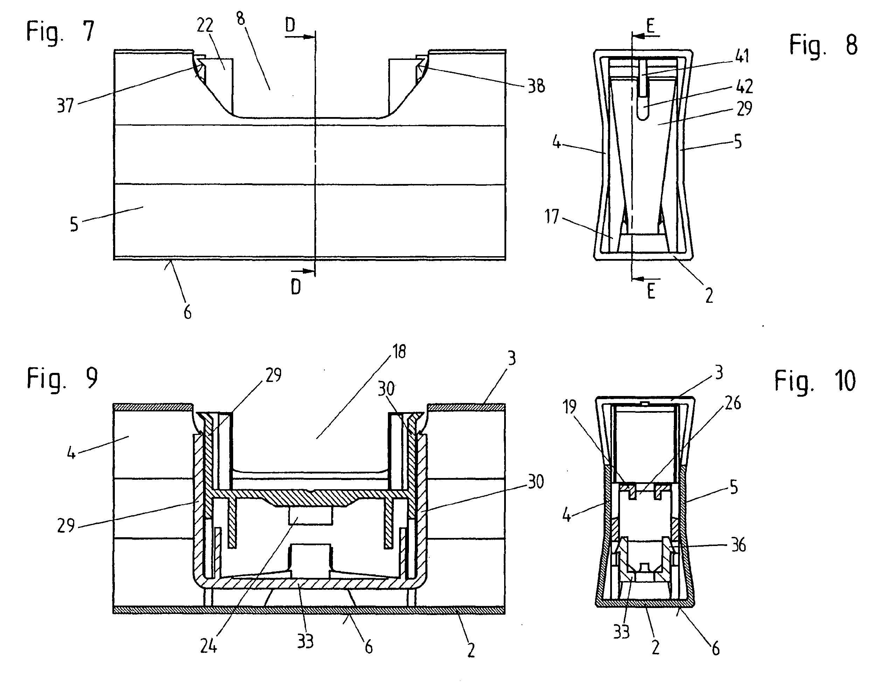

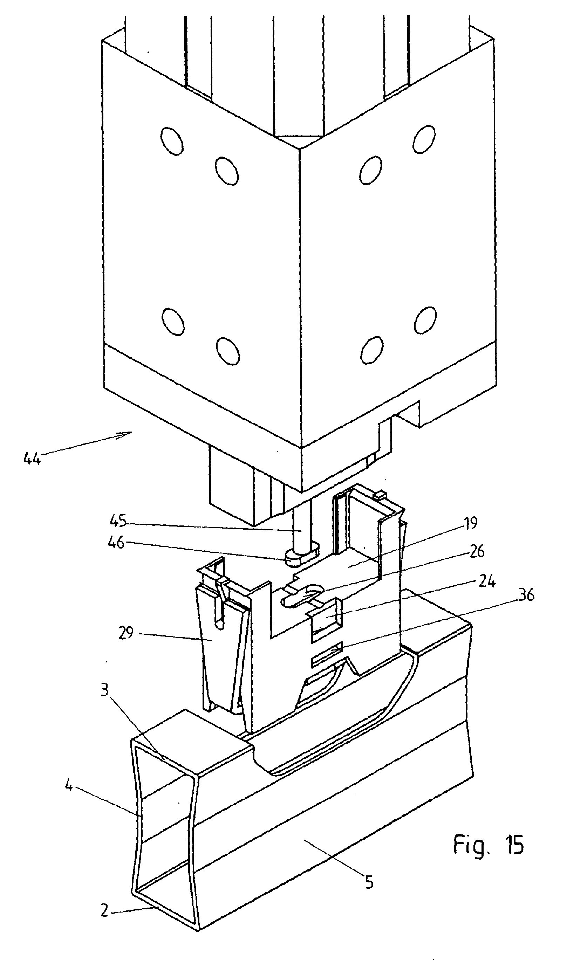

Am Verbindungsschenkel 33 sind im gezeigten Ausführungsbeispiel im mittleren Bereich seiner Längsausdehnung zwei Hakenteile 36 angeordnet. Im montierten Zustand der Haltevorrichtung 9 sind die beiden Hakenteile 36 in die beiden ersten Rastausnehmungen 24 der Brückenabschnitte 23 eingeschnappt. In einer Vorraststellung, in welcher die Haltevorrichtung 9 in die Fensterausnehmung 8 für ihre Montage eingesetzt wird (vgl. Fig. 15) sind die Hakenteile 36 in die zweiten Rastausnehmungen 25 eingeschnappt, wobei diese zweiten Rastausnehmungen 25 eine kleinere Höhe als die ersten Rastausnehmungen 24 aufweisen, sodass die Hakenteile 36 nicht über die gesamte Länge I (in Fig. 6 eingezeichnet) ihrer keilförmigen Rastnasen einschnappen können sondern nur über einen Teil ihrer Länge I (vgl. z. B. Fig. 10).

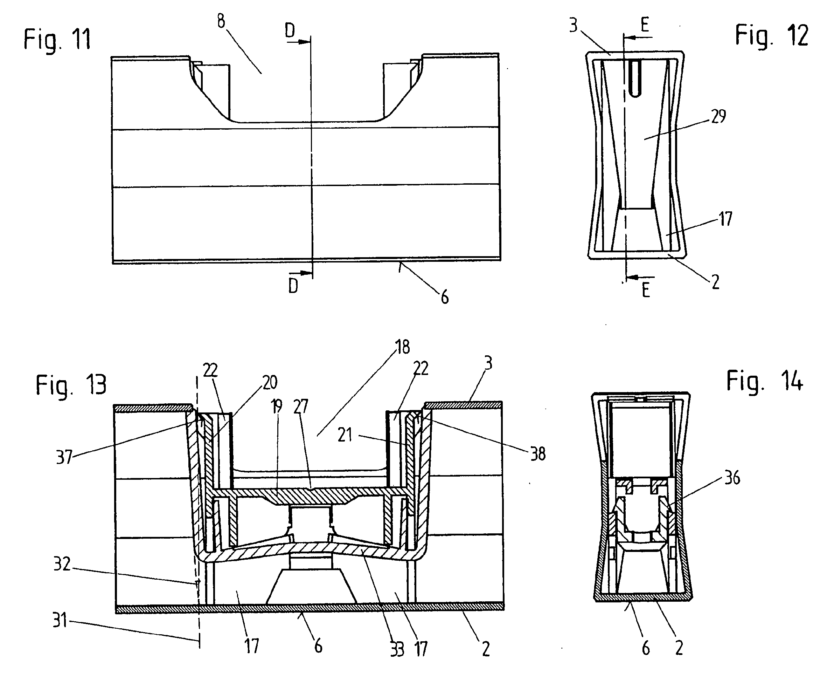

Der Verbindungsschenkel 33 ist elastisch biegbar ausgebildet und im montierten Zustand der Haltevorrichtung 9 elastisch gebogen, wie dies aus den Fig. 4 und 13 ersichtlich ist.

Im montierten Zustand der Haltevorrichtung 9 liegt der Verbindungsschenkel 33 zwischen den an den beiden Längsseiten des Bodenteils 19 angeordneten Stützfüßen 17. Die Arme 29, 30 erstrecken sich im vertikalen Längsschnitt (Fig. 4 bzw. 13) gesehen beidseitig der Libellenfassung.

An den stirnseitigen Teilen 20, 21 der Libellenfassung 15 sind weiters Führungsschrägen 37, 38 angeordnet, die mit den Armen 29, 30 zusammenwirken und welche beim Verschieben des Spannteils 16 in die montierte Stellung der Haltevorrichtung 9 die freien Enden 34, 35 der Arme 29, 30 etwas in Richtung zu den stirnseitigen Enden 39, 40 des Wasserwaagenkörpers 1 auslenken, um die freien Enden 34, 35 der Arme 29, 30 an der Deckwand 3 in Bereichen seitlich der Fensterausnehmung 8 zur Anlage zu bringen. Die Führungsschrägen 37, 38 sind an den voneinander abgewandten Außenseiten der stirnseitigen Teile 20, 22 angebracht, und zwar im Bereich ihrer vom Bodenteil 19 abgelegenen Enden.

An den Außenseiten der stirnseitigen Teile 20, 21 sind weiters Führungsnasen 41 angeordnet, die mit Führungsnuten 42 in den Armen 29, 30 zusammenwirken.

Der Verbindungsschenkel 33 weist eine im montierten Zustand der Haltevorrichtung 9 mit der Durchgangsöffnung 26 im Bodenteil 19 fluchtende Durchgangsöffnung 43 auf.

Zur Montage der Haltevorrichtung wird das Spannteil 16 mit seinen Hakenteilen 36 in die zweiten Rastausnehmungen 25 eingesetzt, wie dies in Fig. 15 dargestellt ist. In der Folge werden die so miteinander verbundenen Teile 15, 16 in die Fensterausnehmung 8 eingesetzt, bis die Stützfüße 17 der Libellenfassung 15 auf der Bodenwand 2 aufstehen (vgl. Fig. 7 bis 10). In der Folge wird das Spannteil 16 in Richtung zur Deckwand 3 gezogen, bis die Hakenteile 36 in die ersten Rastausnehmungen 24 einrasten. Das Spannteil 16 stützt sich hiernach mit den freien Enden 34, 35 seiner Arme 29, 30 an der Innenseite der Deckwand 3 ab und ist elastisch gespannt, wodurch es die Libellenfassung 15 gegen die Bodenwand 2 drückt. Die Haltevorrichtung 9 ist damit zwischen der Deckwand 3 und der Bodenwand 2 verspannt (vgl. Fig. 11 bis 14).

In der Folge wird die Horizontallibelle 7 in den Aufnahmeraum 18 der Libellenfassung 15 eingesetzt, wobei sie wippenartig um die Auflagelinie bzw. teilzylindrische Auflagefläche des Schwenkstegs 28 in der Rinne 27 verschwenkbar ist. Nach der exakten Justierung der Horizontallibelle 7 in der Libellenfassung 15 wird die Horizontallibelle 7 in der Libellenfassung 15 durch Herstellung einer starren Verbindung zwischen diesen beiden Teilen festgelegt, beispielsweise verklebt oder verschweißt.

Weiters wird noch eine Abdeckung 49 aufgesteckt und gegebenenfalls verklebt, welche den Übergangsbereich zwischen der Horizontalliebelle 7 und dem Rand der Fensterausnehmung 8 überdeckt.

Ein Montagewerkzeug 44 für die Montage der Libellenfassung ist in Fig. 15 beispielhaft dargestellt. Das Montagewerkzeug 44 besitzt einen an einem achsial verstellbaren und um seine Längsachse verdrehbaren Schaft 45 angeordneten Kopf 46. In einer Drehstellung des Schaftes 45, die in Fig. 15 dargestellt ist, ist der Kopf 46 durch die Durchgangsöffnungen 26, 43 im Bodenteil 19 und im Verbindungsschenkel 33 durchführbar. In der Folge wird der Schaft 45 um 90° um seine Längsachse verdreht, sodass der Kopf 46 den Rand der Durchgangsöffnung 43 im Verbindungsschenkel 33 hintergreift. In der Folge wird der Schaft 45 achsial zurückgezogen (sodass sich der Kopf 46 in Richtung zur Deckwand 3 bewegt), bis die Hakenteile 36 in den ersten Rastausnehmungen 24 einrasten.

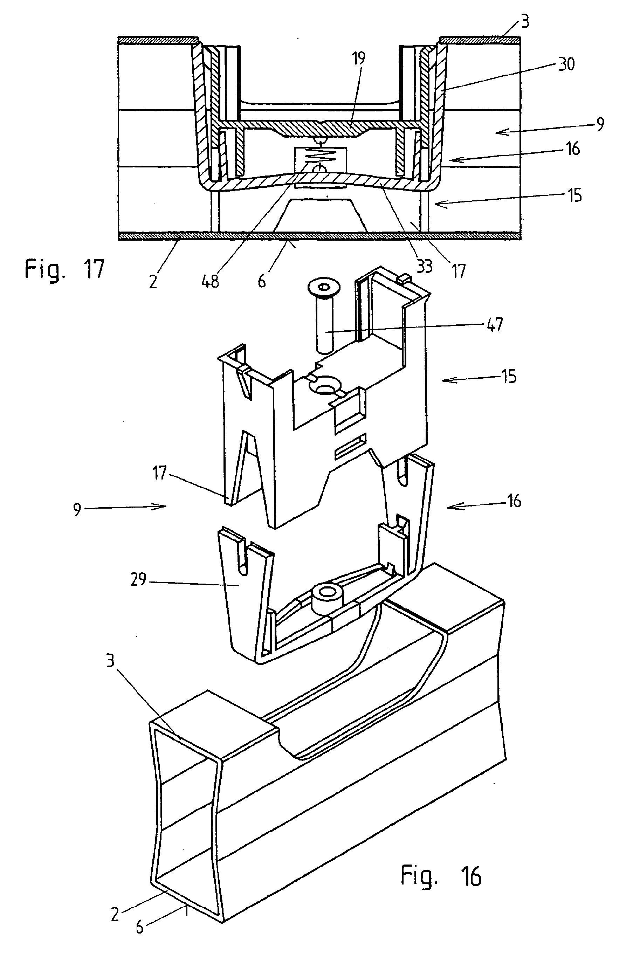

Ein weiteres Ausführungsbeispiel der Erfindung ist in Fig. 16 dargestellt. Zur Verspannung der Haltevorrichtung 9 im Wasserwaagenkörper 1 ist hier eine Spannschraube 47 vorhanden. Mittels der Spannschraube 47 wird das Spannteil 16 nach dem Einsetzen der Haltevorrichtung in die Fensterausnehmung 8 in Richtung zur Deckwand 3 verschoben und unter Abstützung der freien Enden seiner Arme 29, 30 an der Innenseite der Deckwand 3 gespannt, wodurch die Libellenfassung 15 gegen die Bodenwand 2 gedrückt wird.

Ein weiteres Ausführungsbeispiel der Erfindung zeigt Fig. 17. Es ist hier eine zwischen dem Bodenteil 19 der Libellenfassung 15 und dem Verbindungsschenkel 33 des Spannteils 16 wirkende Feder 48 vorhanden, welche hier als Zugfeder ausgebildet ist. Zum Einsetzen der Haltevorrichtung 9 in die Fensterausnehmung 8 wird die Feder 48 soweit gespannt, dass die freien Enden der Arme 29, 30 unterhalb der Führungsschrägen 37, 38 liegen. Hierzu kann ein geeignetes Werkzeug eingesetzt werden, welches den Verbindungsschenkel 33 entsprechend weit vom Bodenteil 19 beabstandet. Nach dem Einsetzen in die Fensterausnehmung 8 gibt das Werkzeug die Teile frei, wodurch die Feder 48 den Verbindungsschenkel 33 in Richtung zur Deckwand zieht, sodass sich die freien Enden der Arme 29, 30 unter Vorspannung der Feder 48 an die Innenseite der Deckwand 3 angedrückt werden und die Libellenfassung 15 im Gegenzug an die Bodenwand 2 angedrückt wird. Das Spannteil 16 bzw. der Verbindungsschenkel 33 des Spannteils 16 kann in diesem Ausführungsbeispiel auch unelastisch ausgebildet sein.

Unterschiedliche Modifikationen der gezeigten Ausführungsbeispiele sind denkbar und möglich, ohne den Bereich der Erfindung zu verlassen. So wäre es beispielsweise denkbar und möglich, mehr als ein Spannteil vorzusehen und das oder die Spannteile könnten auch eine andere als die gezeigte bügelartige Form aufweisen, wobei jeweils bevorzugt ist, dass das oder die Spannteile in Längsrichtung des Wasserwaagenkörpers gesehen beidseitig der Fensterausnehmung 8 an der Innenseite der Deckwand 3 anliegen. Die Fensterausnehmung 8 könnte auch größer oder kleiner als in den gezeigten Ausführungsbeispielen ausgebildet sein, in welchen sie jeweils eine Ausnehmung der Deckwand 3 und an die Deckwand 3 anschließende obere Abschnitte der Seitenwände 4, 5 umfasst.

In den gezeigten Ausführungsbeispielen ist der Spannteil 16 parallel zur Normalen 31 auf die Messfläche 6 gegenüber der Libellenfassung 15 verschiebbar. Auch eine Verschiebbarkeit unter einem Winkel zur Normalen 31 wäre denkbar und möglich, wobei dieser Winkel bevorzugterweise weniger als 45° beträgt.

### Legende zu den Hinweisziffern:

- 1: Wasserwaagenkörper
- 2: Bodenwand
- 3: Deckwand
- 4: Seitenwand
- 5: Seitenwand
- 6: Messfläche
- 7: Horizontallibelle
- 8: Fensterausnehmung
- 9: Haltevorrichtung
- 10: Vertikallibelle
- 11: Libellenkörper
- 12: Blase
- 13: Markierungsring
- 14: Rahmen
- 15: Libellenfassung
- 16: Spannteil
- 17: Stützfuß
- 18: Aufnahmeraum
- 19: Bodenteil
- 20: stirnseitiges Teil
- 21: stirnseitiges Teil
- 22: Flanschsteg
- 23: Brückenabschnitt
- 24: Rastausnehmung
- 25: Rastausnehmung
- 26: Durchgangsöffnung
- 27: Rinne
- 28: Schwenksteg
- 29: Arm
- 30: Arm
- 31: Normale
- 32: Winkel
- 33: Verbindungsschenkel
- 34: Ende
- 35: Ende
- 36: Hakenteil
- 37: Führungsschräge
- 38: Führungsschräge
- 39: stirnseitiges Ende
- 40: stirnseitiges Ende
- 41: Führungsnase
- 42: Führungsnut
- 43: Durchgangsöffnung
- 44: Montagewerkzeug
- 45: Schaft
- 46: Kopf
- 47: Spannschraube
- 48: Feder
- 49: Abdeckung
- 40: Endkappe

## Patentansprüche

1. Wasserwaage mit einem aus einem Hohlprofil bestehenden Wasserwaagenkörper (1), der eine Bodenwand (2), deren Unterseite eine Messfläche (6) bildet, eine Deckwand (3) und die Bodenwand (2) und die Deckwand (3) verbindende Seitenwände (4, 5) aufweist, und mit einer Horizontallibelle (7) für eine Horizontalmessung, die in einer Fensterausnehmung (8) des Wasserwaagenkörpers (1) angeordnet ist und im Wasserwaagenkörper (1) mittels einer Haltevorrichtung (9) befestigt ist, welche im Wasserwaagenkörper (1) verspannt ist und eine Libellenfassung (15), in der die Horizontallibelle (7) festgelegt ist, und mindestens ein Spannteil (16) aufweist, welches zum Verspannen der Haltevorrichtung (9) im Wasserwaagenkörper (1) verschiebbar gegenüber der Libellenfassung (15) ist, wobei das mindestens eine Spannteil (16) gegenüber der Libellenfassung (15) in eine Richtung verschiebbar ist, die einen Winkel von weniger als 45° mit einer Normalen (31) auf die Messfläche (6) einschließt, **dadurch gekennzeichnet, dass** im verspannten Zustand der Haltevorrichtung (9) das mindestens eine Spannteil (16) sich an der Innenseite der Deckwand (3) abstützt und die Libellenfassung (15) vom Spannteil (16) an die Innenseite der Bodenwand (2) angedrückt ist.

2. Wasserwaage nach Anspruch 1, **dadurch gekennzeichnet, dass** das Spannteil (16) zwei Arme (29, 30) aufweist, die im montierten Zustand der Haltevorrichtung (9) einen Winkel (32) von weniger als 45°, bevorzugterweise von weniger als 20°, mit einer Normalen (31) auf die Messfläche (6) einschließen und von einem Verbindungsschenkel (33) verbunden sind und deren vom Verbindungsschenkel (33) abgelegenen Enden (34, 35) sich im vertikalen Längsschnitt des Wasserwaagenkörpers (1) gesehen beidseitig der Fensterausnehmung (8) an der Innenseite der Deckwand (3) abstützen.

3. Wasserwaage nach Anspruch 2, **dadurch gekennzeichnet, dass** sich die Arme (29, 30) im vertikalen Längsschnitt des Wasserwaagenkörpers (1) gesehen beidseitig der Libellenfassung (15) erstrecken.

4. Wasserwaage nach Anspruch 2 oder Anspruch 3, **dadurch gekennzeichnet, dass** der Verbindungsschenkel (33) zwischen Stützfüßen (17) der Libellenfassung (15) liegt, die in einem Querschnitt des Wasserwaagenkörpers (1) gesehen beidseitig des Verbindungsschenkels (33) liegen und die mit ihren freien Enden an die Innenseite der Bodenwand (2) angedrückt sind.

5. Wasserwaage nach einem der Ansprüche 1 bis 4, **dadurch gekennzeichnet, dass** im verspannten Zustand der Haltevorrichtung (9) das mindestens eine Spannteil (16) mit der Libellenfassung (15) durch eine Schnappverbindung verrastet ist.

6. Wasserwaage nach einem der Ansprüche 2 bis 5, **dadurch gekennzeichnet, dass** am Verbindungsschenkel (33), vorzugsweise im mittleren Bereich der Längsausdehnung des Verbindungsschenkels (33), mindestens ein Hakenteil (36) angeordnet ist, das im verspannten Zustand der Haltevorrichtung in eine Rastausnehmung (24) der Libellenfassung (15) eingeschnappt ist.

7. Wasserwaage nach Anspruch 6, **dadurch gekennzeichnet, dass** zwei im Querschnitt des Wasserwaagenkörpers gesehen an gegenüberliegenden Längsseiten des Verbindungsschenkels (33) angeordnete und in Rastausnehmungen (24) eingeschnappte Hakenteile (36) vorhanden sind.

8. Wasserwaage nach Anspruch 6 oder Anspruch 7, **dadurch gekennzeichnet, dass** für jedes Hakenteil (36) zusätzlich zur ersten Rastausnehmung (24) eine zweite Rastausnehmung (25) der Libellenfassung (15) vorhanden ist, in welche das Hakenteil (36) in einer Vorrastposition des Spannteils (16) beim Einsetzen der Haltevorrichtung (9) in die Fensterausnehmung (8) eingerastet ist.

9. Wasserwaage nach einem der Ansprüche 1 bis 5, **dadurch gekennzeichnet, dass** zur Verspannung der Haltevorrichtung (9) im Wasserwaagenkörper (1) mindestens eine zwischen der Libellenfassung (15) und dem mindestens einen Spannteil (16) wirkende Spannschraube (47) vorhanden ist.

10. Wasserwaage nach einem der Ansprüche 1 bis 5, **dadurch gekennzeichnet, dass** zur Verspannung der Haltevorrichtung (9) im Wasserwaagenkörper (1) mindestens eine zwischen der Libellenfassung (15) und dem mindestens einen Spannteil (16) wirkende Feder (48) vorhanden ist.

11. Wasserwaage nach einem der Ansprüche 1 bis 10, **dadurch gekennzeichnet, dass** das mindestens eine Spannteil (16) in eine Richtung verschiebbar ist, die parallel zur Normalen (31) auf die Messfläche (6) ist.

12. Wasserwaage nach einem der Ansprüche 2 bis 11, **dadurch gekennzeichnet, dass** an der Libellenfassung (15) mit den Armen (29, 30) des Spannteils (16) zusammenwirkende Führungsschrägen (37, 38) angeordnet sind, welche beim Verschieben des Spannteils (16) in Richtung zur Deckwand (3) die freien Enden (34, 35) der Arme (29, 30) für ihre Anlage an seitlich der Fensterausnehmung (8) liegenden Bereichen der Deckwand (3) in Richtung zu den stirnseitigen Enden (39, 40) des Wasserwaagenkörpers (1) auslenken.

13. Wasserwaage nach Anspruch 12, **dadurch gekennzeichnet, dass** die Führungsschrägen an den voneinander abgewandten Außenseiten von stirnseitigen Teilen (20, 21) der Libellenfassung (15) im Bereich der der Deckwand (3) zugewandten Enden dieser stirnseitigen Teile (20, 21) angeordnet sind.

14. Wasserwaage nach einem Ansprüche 1 bis 13, **dadurch gekennzeichnet, dass** die Libellenfassung (15) einen Aufnahmeraum (18) für die Horizontallibelle (7) aufweist, der in Richtung zur Bodenwand (2) des Wasserwaagenkörpers von einem Bodenteil (19) und in Richtung zu den stirnseitigen Enden (39, 40) des Wasserwaagenkörpers (1)von stirnseitigen Teilen (20, 21) begrenzt wird.

15. Wasserwaage nach Anspruch 14, **dadurch gekennzeichnet, dass** die Stützfüße (17) der Libellenfassung (15) vom Bodenteil (19) in Richtung zur Bodenwand (2) des Wasserwaagenkörpers (1) abstehen, wobei bevorzugterweise an beiden längsseitigen Rändern des Bodenteils (19) Stützfüße (17) angeordnet sind.

16. Wasserwaage nach einem der Ansprüche 2 bis 15, **dadurch gekennzeichnet, dass** der Verbindungsschenkel (33) elastisch biegbar ist und im verspannten Zustand der Haltevorrichtung (9) elastisch gebogen ist.

17. Verfahren zur Montage einer Horizontallibelle (7) in einer Fensterausnehmung (8) eines Wasserwaagenkörpers (1), der von einem Hohlprofil gebildet wird und eine Bodenwand (2), deren Unterseite eine Messfläche (6) bildet, eine Deckwand (3) und die Bodenwand (2) und die Deckwand (3) verbindende Seitenwände (4, 5) aufweist, wobei eine Haltevorrichtung (9), die eine Libellenfassung (15), an der die Horizontallibelle (7) befestigt ist, und mindestens ein Spannteil (16) aufweist, in die Fensterausnehmung (8) des Wasserwaagenkörpers (1) eingesetzt wird und in der Folge das mindestens eine Spannteil (16) gegenüber der Libellenfassung (15) in eine Richtung verschoben wird, die mit einer Normalen (31) auf die Messfläche (6) einen Winkel von weniger als 45° einschließt, wobei die. Haltevorrichtung (9) im Wasserwaagenkörper (1) verspannt wird, **dadurch gekennzeichnet, dass** zur Verspannung der Haltevorrichtung (9) im Wasserwaagenkörper (1) das Spannteil (16) von einer von der Deckwand (3) distanzierten Position in eine an der Innenseite der Deckwand (3) angedrückte Position verschoben wird, wobei die Libellenfassung (15) vom sich an der Deckwand (3) abstützenden Spannteil (16) an die Innenseite der Bodenwand (2) angedrückt wird und die Haltevorrichtung (9) zwischen der Deckwand (3) und der Bodenwand (2) verspannt wird.

18. Verfahren.nach Anspruch 17, **dadurch gekennzeichnet, dass** das mindestens eine Spannteil (16) und die Libellenfassung (15) zum Verspannen zwischen der Deckwand (3) und der Bodenwand (2) miteinander verrastet werden.

19. Verfahren nach Anspruch 18, **dadurch gekennzeichnet, dass** die Libellenfassung (15) und das mindestens eine Spannteil (16) in einem vorverrasteten Zustand in die Fensterausnehmung (8) eingesetzt werden und in der Folge mittels eines Montagewerkzeuges (44), welch.es einen an einem in Achsialrichtung verstellbaren und um seine Längsachse verdrehbaren Schaft (45) angeordneten Kopf (46) aufweist, durch Durchführen des Kopfes (46) durch Durchgangsöffnungen (26) in der Libellenfassung (15) und Durchgangsöffnungen (43) im Spannteil (16) und Hintergreifen der Ränder der Durchgangsöffnung (43) im Spannteil (16) unter Verdrehung des Schaftes (45) um seine Längsachse und anschließendes Zurückziehen des Kopfes (46) verspannt und in ihren verrasteten Zustand gebracht werden.

## Claims

1. A spirit level with a spirit-level body (1) which consists of a hollow profile and which comprises a base wall (2), the underside of which forms a measurement face (6), a cover wall (3) and lateral walls (4, 5) joining the base wall (2) and the cover wall (3), and with a horizontal level (7) for horizontal measurement, which is situated in a window aperture (8) in the spirit-level body (1) and which is fastened in the spirit-level body (1) by means of a holding apparatus (9) which is clamped in the spirit-level body (1), and comprises a mounting (15) of the level, in which the horizontal level (7) is fixed, and at least one clamping part (16), which is displaceable with respect to the mounting (15) of the level in order to clamp the holding apparatus (9) in the spirit-level body (1), wherein the at least one clamping part (16) is displaceable with respect to the mounting (15) of the level in a direction which forms an angle of less than 45° with a perpendicular (31) to the measurement face (6), **characterized in that** in the clamped state of the holding apparatus (9) the at least one clamping part (16) is supported on the inner side of the cover wall (3), and the mounting (15) of the level is pressed by the clamping part (16) against the inner side of the base wall (2).

2. A spirit level according to Claim, 1, **characterized in that** the clamping part (16) has two arms (29, 30) which in the mounted state of the holding apparatus (9) form an angle (32) of less than 45°, and preferably of less than 20°, with a perpendicular (31) to the measurement face (6), and they are joined by a connecting limb (33), and their ends (34, 35) remote from the connecting limb (33) are supported on the inner side of the cover wall (3) on both sides of the window aperture (8) as viewed in the vertical longitudinal section of the spirit-level body (1).

3. A spirit level according to Claim 2, **characterized in that** the arms (29, 30) extend on both sides of the mounting (15) of the level as viewed in the vertical longitudinal section of the spirit-level body (1).

4. A spirit level according to Claim 2 or Claim 3, **characterized in that** the connecting limb (33) is situated between support feet (17) of the mounting (15) of the level which are arranged on both sides of the connecting limb (33) as viewed in a cross-section of the spirit-level body (1) and which are pressed with their free ends against the inner side of the base wall (2).

5. A spirit level according to any one of Claims 1 to 4, **characterized in that** in the clamped state of the holding apparatus (9) the at least one clamping part (16) engages with the mounting (15) of the level by a snap connexion.

6. A spirit level according to any one of Claims 2 to 5, **characterized in that** at least one hook part (36), which is snapped into a catch aperture (24) of the mounting (15) of the level in the clamped state of the holding apparatus, is arranged on the connecting limb (33), preferably in the middle region of the longitudinal extension of the connecting limb (33).

7. A spirit level according to Claim 6, **characterized in that** two hook parts (36) are provided which are arranged on opposite longitudinal sides of the connecting limb (33) as viewed in the cross-section of the spirit-level body (1) and which are snapped into catch apertures (24).

8. A spirit level according to Claim 6 or Claim 7, **characterized in that** a second catch aperture (25) of the mounting (15) of the level, in which the hook part (36) engages in a pre-catching position of the clamping part (16) during the insertion of the holding apparatus (9) into the window aperture (8), is provided for each hook part (36) in addition to the first catch aperture (24).

9. A spirit level according to any one of Claims 1 to 5, **characterized in that** at least one clamping screw (47) acting between the mounting (15) of the level and the at least one clamping part (16) is provided in order to clamp the holding apparatus (9) in the spirit-level body (1).

10. A spirit level according to any one of Claims 1 to 5, **characterized in that** at least one spring (48) acting between the mounting (15) of the level and the at least one clamping part (16) is provided in order to clamp the holding apparatus (9) in the spirit-level body (1).

11. A spirit level according to any one of Claims 1 to 10, **characterized in that** the at least one clamping part (16) is displaceable in a direction which is parallel to the perpendicular (31) to the measurement face (6).

12. A spirit level according to any one of Claims 2 to 11, **characterized in that** guide slopes (37, 38), which co-opcrate with the arms (29, 30) of the clamping part (16) and which deflect the free ends (34, 35) of the arms (29, 30) for the abutment of the latter on regions of the cover wall (3) situated at the side of the window aperture (8) in the direction towards the ends (39, 40) on the front of the spirit-level body (1) during the displacement of the clamping part (16) in the direction towards the cover wall (3), are arranged on the mounting (15) of the level.

13. A spirit level according to Claim 12, **characterized in that** the guide slopes on the outer sides - facing away from each other - of parts (20, 21) on the front of the mounting (15) of the level are arranged in the region of the ends - facing the cover wall (3) - of the said parts (20, 21) on the front.

14. A spirit level according to any one of Claims 1 to 13, **characterized in that** the mounting (15) of the level has a receiving space (18) for the horizontal level (7), which is bounded by a base part (19) in the direction towards the base wall (2) of the spirit-level body and by parts (20, 21) on the front in the direction towards the ends (39, 40) on the front of the spirit-level body (1).

15. A spirit level according to Claim 14, **characterized in that** the support feet (17) of the mounting (15) of the level project from the base part (19) in the direction towards the base wall (2) of the spirit-level body (1), wherein support feet (17) are preferably arranged on the two edges of the longitudinal sides of the base part (19).

16. A spirit level according to any one of Claims 2 to 15, **characterized in that** the connecting limb (33) is resiliently flexible and is resiliently bent in the clamped state of the holding apparatus (9).

17. A method of mounting a horizontal level (7) in a window aperture (8) in a spirit-level body (1), which is formed by a hollow profile and which comprises a base wall (2), the underside of which forms a measurement face (6), a cover wall (3) and lateral walls (4, 5) joining the base wall (2) and the cover wall (3), wherein a holding apparatus (9), which has a mounting (15) of the level - to which the horizontal level (7) is fixed - and at least one clamping part (16), is inserted into the window aperture (8) in the spirit-level body (1) and, as a result, the at least one clamping part (16) is displaced with respect to the mounting (15) of the level in a direction which forms an angle of less than 45° with a perpendicular (31) to the measurement face (6), wherein the holding apparatus (9) is clamped in the spirit-level body (1), **characterized in that** the clamping part (16) is displaced from a position at a distance from the cover wall (3) into a position pressed against the inner side of the cover wall (3) in order to clamp the holding apparatus (9) in the spirit-level body (1), wherein the mounting (15) of the level is pressed against the inner side of the base wall (2) by the clamping part (16) supported on the cover wall (3), and the holding apparatus (9) is clamped between the cover wall (3) and the base wall (2).

18. A method according to Claim 17, **characterized in that** the at least one clamping part (16) and the mounting (15) of the level engage with each other for clamping between the cover wall (3) and the base wall (2).

19. A method according to Claim 18, **characterized in that** the mounting (15) of the level and the at least one clamping part (16) are inserted into the window aperture (8) in a pre-engaged state and, as a result, are clamped and moved into their engaged state by means of a mounting tool (44), which has a head (46) arranged on a shaft (45) displaceable in the axial direction and rotatable about its longitudinal axis, by passing the head (46) through continuous openings (26) in the mounting (15) of the level and continuous openings (43) in the clamping part (16) and engaging behind the edges of the continuous opening (43) in the clamping part (16) whilst turning the shaft (45) about its longitudinal axis and subsequently retracting the head (46).

## Revendications

1. Niveau à bulle comportant un corps formé d'un profil creux ayant un fond (2) dont la face inférieure constitue une surface de mesure (6), une paroi supérieure (3) et des parois latérales (4, 5) reliant le fond (2) et la paroi supérieure (3) ainsi qu'une cellule horizontale (7) pour mesurer le niveau horizontal, cette cellule étant logée dans un encadrement de fenêtre (8) du corps (1) du niveau en étant fixé par un dispositif de retenue (9) dans le corps (1), ce dispositif de retenue est enserré dans le corps (1) et il fixe un entourage de cellule (15) dans lequel est bloqué la cellule horizontale (7) et au moins une pièce de serrage (16) coulissant par rapport à l'encadrement de cellule (15) pour serrer le dispositif de retenue (9) dans le corps (1) du niveau,
au moins l'unique pièce de serrage (16) coulisse dans une direction par rapport à l'encadrement de cellule (15) qui fait un angle inférieur à 45° par rapport à la normale (31) à la surface de mesure (6)
**caractérisé en ce que**
à l'état serré du dispositif de fixation (9) au moins l'unique pièce de serrage (16) s'appuie contre le côté intérieur de la paroi supérieure (3) et pousse l'encadrement de cellule (15) par la pièce de serrage (16) contre le côté intérieur du fond (2).

2. Niveau à bulle selon la revendication 1,
**caractérisé en ce que**
la pièce de serrage (16) comporte deux bras (29, 30) qui font entre eux un angle et sont reliés par une branche de liaison (33)
les extrémités (34, 35) non situées du côté de la branche de liaison (33) s'appuient de part et d'autre de la cavité de fenêtre (8) contre le côté intérieur de la paroi supérieure (3) lorsqu'on regarde le corps (1) du niveau à bulle en coupe verticale longitudinale.

3. Niveau à bulle selon la revendication 2,
**caractérisé en ce que**
les bras (29, 30) s'étendent de part et d'autre de l'encadrement de cellule (15) pour une coupe longitudinale verticale du corps de niveau (1).

4. Niveau à bulle selon la revendication 2 ou la revendication 3,
**caractérisé en ce que**
la branche de liaison (33) se situe entre les pieds (17) de l'encadrement de cellule (15) qui viennent dans une section du corps du niveau (1), lorsqu'on regarde de part et d'autre de la branche de liaison (33) et dont les extrémités libres sont poussées contre le côté intérieur du fond (2).

5. Niveau à bulle selon l'une des revendications 1 à 4,
**caractérisé en ce qu'**
à l'état serré du dispositif de fixation (9) au moins une pièce de serrage (16) est accrochée par une liaison par enclipsage à l'encadrement de cellule (15).

6. Niveau à bulle selon l'une des revendications 2 à 5,
**caractérisé en ce que**
la branche de liaison (33) comporte de préférence dans sa zone médiane de sa longueur, au moins une pièce formant crochet (36), qui à l'état tendu du dispositif de retenue, est enclipsée dans une cavité d'enclipsage (24) de l'encadrement de cellule (15).

7. Niveau à bulle selon la revendication 6
**caractérisé en ce qu'**
en vue en coupe du corps de niveau, sur les grands côtés opposés de la branche de liaison (33) il y a des pièces formant crochet (36) enclipsées dans les cavités d'enclipsage (34).

8. Niveau à bulle selon la revendication 6 ou la revendication 7,
**caractérisé en ce que**
pour chaque pièce en forme de crochet (36), en plus d'une première cavité d'enclipsage (24), il y a une seconde cavité d'enclipsage (25) de l'encadrement de cellule (15) dans laquelle s'accroche la pièce en forme de crochet (36) en position de pré-enclipsage de la pièce de serrage (16) lorsqu'on place le dispositif de retenue (9) dans la cavité de fenêtre (8).

9. Niveau à bulle selon l'une des revendications 1 à 5,
**caractérisé en ce que**
pour serrer le dispositif de fixation (9) dans le corps (1) du niveau, il est prévu au moins une vis de serrage (47) coopérant entre l'encadrement de cellule (15) et au moins la pièce de serrage (16).

10. Niveau à bulle selon l'une des revendications 1 à 5,
**caractérisé en ce que**
pour serrer le dispositif de fixation (9), le corps (1) du niveau comporte au moins un ressort (48) agissant entre l'encadrement de niveau (15) et au moins une pièce de serrage (16).

11. Niveau à bulle selon l'une des revendications 1 à 10,
**caractérisé en ce qu'**
au moins la pièce de serrage (16) peut coulisser dans une direction parallèle à la normale (31) à la surface de mesure (6).

12. Niveau à bulle selon l'une des revendications 2 à 11,
**caractérisé en ce que**
l'encadrement de cellule (15) comporte des rampes de guidage (37, 38) coopérant avec les bras (29, 30) de la pièce de serrage (16), au coulissement de la pièce de serrage (16) en direction de la paroi supérieure (3), ces rampes écartent les extrémités libres (34, 35) des bras (29,30) pour leur appui contre les zones du plafond (13) situés à côté de la cavité de fenêtre (8), en direction des extrémités côté frontal (39, 40) du corps de cellule (1).

13. Niveau à bulle selon la revendication 12,
**caractérisé en ce que**
la rampe de guidage comporte sur les côtés extérieurs non tournés l'un vers l'autre, deux pièces, côté frontal (20, 21) de l'encadrement de cellule (15), au niveau des extrémités tournées vers la paroi supérieure (3), des pièces (20, 21) dont la face frontale est tournée vers ces extrémités.

14. Niveau à bulle selon l'une des revendications 1 à 13,
**caractérisé en ce que**
l'encadrement de cellule (15) comporte un logement (18) pour la cellule horizontale (7) qui est délimite en direction de la paroi du fond (2) du corps de niveau par une partie de fond (19) et en direction des extrémités (39, 40) côté frontal du corps (1) de niveau, par des parties frontales (20, 21).

15. Niveau à bulle selon la revendication 4,
**caractérisé en ce que**
les pieds (17) de l'encadrement de cellule (15) sont en saillie de la partie de fond (19) en direction du fond (2) du corps de niveau, et de préférence les deux bords côté longitudinal de la partie de fond (19) comportent des pieds d'appui (17).

16. Niveau à bulle selon l'une des revendications 2 à 15,
**caractérisé en ce que**
la branche de liaison (33) est déformable élastiquement et elle est cintrée élastiquement à l'état tendu du dispositif de fixation (9).

17. Procédé de montage d'une cellule horizontale (7) dans une cavité de fenêtre (8) d'un corps (1) de niveau à bulle, formé par un profil creux et ayant un fond (2) dont la face inférieure constitue une surface de mesure (6), une paroi supérieure (3) et des parois latérales (4, 5) reliant le fond (2) et la paroi supérieure (3), un dispositif de retenue (9), ayant un encadrement de cellule (15) auquel est fixé la cellule horizontale (7) et au moins une pièce de serrage (16) est logée dans la cavité de fenêtre (8) du corps de niveau (1) et ensuite on coulisse au moins la pièce de serrage (16) par rapport à l'encadrement de cellule (15) dans une direction faisant avec une normale (31) et la surface de mesure (6), un angle inférieur à 45°, pour bloquer ainsi le dispositif de retenue (9) dans le corps de niveau (1),
**caractérisé en ce que**
pour serrer le dispositif de retenue (9) dans le corps de niveau (1), la pièce de serrage (16) est coulissée d'une position écartée de la paroi supérieure (3) dans une position appliquée contre le côté intérieur de la paroi supérieure (3),
l'encadrement de cellule (15) étant poussé contre le côté intérieur du fond (2) par la pièce de serrage (16) qui s'appuie contre la paroi supérieure (3) et le dispositif de retenue (9) est tendu entre la paroi supérieure (3) et le fond (2).

18. Procédé selon la revendication 17,
**caractérisé en ce qu'**
on accroche l'un à l'autre une pièce de serrage (16) et un encadrement de cellule (15) pour réaliser le serrage entre la paroi supérieure (3) et le fond (2).

19. procédé selon la revendication 18,
**caractérisé en ce que**
l'encadrement de cellule (15) et au moins une pièce de serrage (16) sont placés à l'état pré-engagé dans la cavité de fenêtre (8) et ensuite, à l'aide d'un outil de montage (44) ayant une tête (46) sur une tige (45) réglable dans la direction axiale et pivotant autour de son axe longitudinal, par passage de la tête (46) à travers des orifices de passage (26) dans l'encadrement de cellule (15) et des orifices de passage (43) dans la partie de serrage (16) puis prise par derrière des bords de l'orifice de passage (43), dans la pièce de serrage (16) en tournant l'axe (45) autour de son axe géométrique longitudinal et ensuite en retirant la tête (46) on bloque et le blocage reste maintenu.
